# EUROPEAN PATENT APPLICATION

(11) **EP 4 819 559 A1**
(43) Date of publication of application: **07.10.2026**
(21) Application number: 25168333.0
(22) Date of filing: 03.04.2025
(51) Int. Cl.: H04L 41/046, H04L 41/16

(54) **METHOD FOR CONTROLLING A COMMUNICATION NETWORK**

(71) Applicant: Deutsche Telekom AG, 53113 Bonn (DE)
(72) Inventor: HAFEZ, Ahmed, 40591 Düsseldorf (DE)
(74) Representative: RDL Patentanwälte PartG mbB

(57) **Abstract**

A method for controlling a communication network, wherein an artificial intelligence, Al, agent controls a communication network by transmitting control requests to a control interface of the communication network, each control request defining an operational configuration of the communication network to be realized by the communication network, a communication network and a computer program product.

## Description

The invention relates to a method for controlling a communication network, wherein an artificial intelligence, Al, agent connected to a communication network controls the communication network by transmitting control requests to the communication network, each control request defining an operational configuration of the communication network to be realized by the communication network. The invention further relates to a communication network and a computer program product.

Communication networks are controlled by agents, i.e., software modules which steadily adapt the respective communication network to current conditions and requirements. Adapting the communication network usually comprises realizing an operational configuration, i.e., setting a plurality of runtime parameters of the communication network.

Several agents currently involve an artificial intelligence, Al, and more and more agents will involve an Al in the future. Such agents are called Al agents herein. Thus, Al agents shall be understood as software modules comprising an internal artificial neural network or accessing an external artificial neural network while controlling the communication network.

However, contrary to traditional agents a future behavior of an Al agent cannot be predicted as the Al agent, more precisely the artificial neural network of the Al agent, keeps on learning during a runtime of the Al agent. Correspondingly, the Al agent may eventually misbehave affecting adversely a proper function of the communication network which is undesirable.

It is, therefore, an object of the invention to suggest a method for controlling a communication network which allows for the Al agent controlling the communication network and, at the same time, prevents the Al agent from adversely affecting the communication network. Further objects of the invention are to provide a communication network and a computer program product, respectively.

One aspect of the invention is a method for controlling a communication network, wherein an artificial intelligence, Al, agent controls a communication network by transmitting control requests to the communication network, each control request defining an operational configuration of the communication network to be realized by the communication network. Controlling the communication network includes an artificial intelligence steadily adapting the operational configuration of the communication network to current conditions and requirements. The artificial intelligence is provided by an artificial neural network comprised or accessed by the Al agent. The Al agent controls the communication network by means of transmitted control requests.

According to the invention, the Al agent is connected to a dedicated control interface of the communication network and an Al monitoring unit of the communication network prevents a received control request from being forwarded to an operation support system, OSS, of the communication network when a parameter value of the defined operational configuration exceeds a predetermined range and allows the received control request for being forwarded to the OSS and the defined operational configuration being realized by the communication network when the parameter value is within the predetermined range. The dedicated control interface is the only way the Al agent is allowed for connecting to the communication network. In other words, a single entry point for Al agents accessing the communication network is created.The Al monitoring unit permanently monitors the dedicated control interface and filters, i.e. checks each control request to pass the dedicated control interface. The automatic filtering imposes a human-like control on any configuration decision taken by the Al agent. Thus, an expensive human control is obsolete

Each operational configuration defined by the control request comprises a plurality of parameter values determining an operation of the communication network. Of course, the defined operational configuration may be partial, i.e. configure a subsystem of the communication network, not the communication network as a whole. Accordingly, the defined operational configuration restricts the Al agent to controlling the subsystem.

The Al monitoring unit protects the communication network from inadequate, potentially detrimental or even fatal operational configurations the parameter values of which lying outside the predetermined range. Thus, the communication network is effectively protected from being adversely affected by the Al agent. The effective protection is the more relevant for the communication network and an operator operating the communication network the more Al agents are connected to the communication network controlling the communication network simultaneously.

It is noted that the term "range" shall be interpreted broadly. The range may have a zero width, i.e. comprise a single parameter value. The range may also be multi-part, particularly excluding one single parameter value or more than one discrete single parameter values. Thus, the predetermined range also allows to include or exclude a single parameter value or a plurality of discrete single parameter values.

Preferably, the Al monitoring unit, upon each reception of a control request, verifies an authorization of the Al agent by assessing a registration of the Al agent with an Al inventory unit of the communication network. Authorizing the Al agent ensures that the Al agent is known to the communication network, i.e., not anonymous. The Al inventory unit comprises a registration database an entry of which is associated with the Al agent. The Al inventory unit may be a service of the communication network and/or provided by a core server of the communication network.

In an embodiment of the invention, the Al inventory unit initially registers the Al agent upon an authorization request received from the Al agent via an URL provided by an element management system, EMS, of the communication network, assigns an Al agent ID to the Al agent and receives a plurality of attributes defining a type of the Al agent, a purpose of the Al agent, administrative data associated with the Al agent and/or technical data of the Al agent, the attributes being associated with the Al agent ID. Of course, the Al agent may retire from controlling the communication network and have the Al agent ID canceled by the Al inventory unit. Of course, the Al agent may alternatively immediately register with the Al monitoring unit without involving the EMS in case the Al monitoring unit comprises the Al inventory unit.

The EMS is a central network management system of the communication network and configured for handling registration processes. The Al agent ID is unique among registered Al agents. The administrative data may comprise a date of deployment, a model version of the artificial neural network, a date of a last update. The technical data may comprise a model accuracy based on training data of the artificial neural network, a status, i.e. active or inactive of the Al agent and/or a host system of the Al agent. Assigning the Al agent ID may additionally or alternatively comprise providing a certificate, e.g., an application programming interface, API, token to the Al agent.

Verifying the authorization may comprise verifying the Al agent ID and attributes presented in the control request. Verifying the authorization may additionally or alternatively comprise assessing a certificate presented by the Al agent with the control request. The certificate may expire at a predetermined time or revoked by the Al inventory unit, both resulting in the Al agent being suspended or deactivated.

The Al monitoring unit queries the Al inventory unit based on the Al agent ID and receives the registered attributes. An authorization of the Al agent is verified in case the Al agent ID exists in the Al inventory unit and the attributes presented in the control request equal the registered attributes. Of course, the Al agent may trigger an update of the registered data if desired. The Al inventory unit favorably logs each update triggered by the Al agent.

The Al monitoring unit advantageously receives the predetermined range from the Al inventory unit. The Al inventory unit may also store the predetermined ranges of parameter values of operational configurations, the stored predetermined ranges assigned to the Al agent ID.

The EMS may provide the Al inventory unit. As the EMS is a central entity, i.e. core functionality of the communication network and particularly in case the EMS handles the registration process, the Al inventory unit being provided by the EMS increases an efficiency of the authorization. The Al inventory unit may be operated under a legal supervision.

In a favorable embodiment, the communication network protects the Al monitoring unit from being manipulated by the Al agent. In other words, the Al monitoring unit is hard-coded. Thus, the Al agent is prevented from stopping or manipulating, i.e. reprogramming the Al monitoring unit which increases a security of the communication network.

The Al monitoring unit may raise an alert when the control request is not being forwarded to the OSS or when the Al agent tries to manipulate the Al monitoring unit. The raised alert indicates either a rejected, i.e., not forwarded control request or a manipulation attempt. Due to the alert, the operator may assess the event and take adequate measures.

In another embodiment, the Al agent automatically controls the communication network in a closed loop. The closed loop allows for the Al agent autonomously and automatically controlling the communication network. The closed loop comprises transmitting the control request and receiving current operational data from the communication network, i.e., a feedback resulting from the operational configuration realized due to the transmitted control request.

Preferably, the Al agent controls a radio access network, RAN, as the communication network. The RAN may be configured as a cellular network. Cellular networks are subject to varying loads and benefit from intelligent real-time controls.

The Al monitoring unit may additionally log each control request. The logging allows for a retrospective analysis of the total activity of the Al agent. Particularly, each control request forwarded by the dedicated control interface may be assessed in case an operational configuration still has adversely affected the communication network although the corresponding control request was forwarded.

The Al monitoring unit advantageously prevents a control request from being forwarded to the OSS when a number of control requests during a time interval exceeds a maximum rate of control requests configured by an operator of the communication network. In other words, a control intensity of the Al agent is limited. The limitation ensures that an average frequency of operational configuration changes caused by the Al agent is low.

Additionally or alternatively, the Al monitoring unit may prevent a control request from being forwarded to the OSS when an operational configuration of the communication network defined by the control request is different from a plurality of predetermined operational configurations. In other words, the Al agent may not change parameter values independently although respectively within their respective predetermined ranges. Rather is the Al agent allowed for having discrete combinations of parameter values realized by the communication network.

A second aspect of the invention is a communication network, comprising a control interface to be connected to by an artificial intelligence, Al, agent. The control interface generally allows for an agent connecting to the communication network and controlling an operation of the communication network.

According to the invention, the control interface is dedicated and the communication network further comprises an Al monitoring unit associated with the dedicated control interface to filter control requests received from the Al agent via the dedicated control interface, the Al monitoring unit being configured for carrying out a method according to an embodiment of the invention. The dedicated control interface is the only way the Al agent is allowed for connecting to the communication network and controlling the communication network. The dedicated control interface is permanently monitored by the Al monitoring unit.

A third aspect of the invention is a computer program product, comprising a digital storage medium storing a program code. The digital storage medium is chosen from the group comprising a compact disk, CD, a digital versatile disk, DVD, a hard disk, HD, a random access memory, RAM, chip, a universal serial bus, USB, stick, a cloud storage and the like.

According to the invention, the program code causes a computing device to carry out a method according to an embodiment of the invention as the Al monitoring unit when being executed by a processor of the computing device. The program code enables the computing device to participate in the method as the Al monitoring unit and protect the communication network from being adversely affected by an occasional, intentional, erroneous and/or malicious manipulation.

It is noted that all functionality described herein may be bundled to form an integrated operation support system, OSS, specific for Al agents, i.e. an additional functional entity of the communication network supporting a secure control of the communication network by Al agents.

An essential advantage of the inventive method is that a communication network is controlled by an Al agent and, at the same time, effectively protected from being adversely affected by the Al agent. Apart from that, a malicious Al agent is also prevented from intentionally manipulate the communication network.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

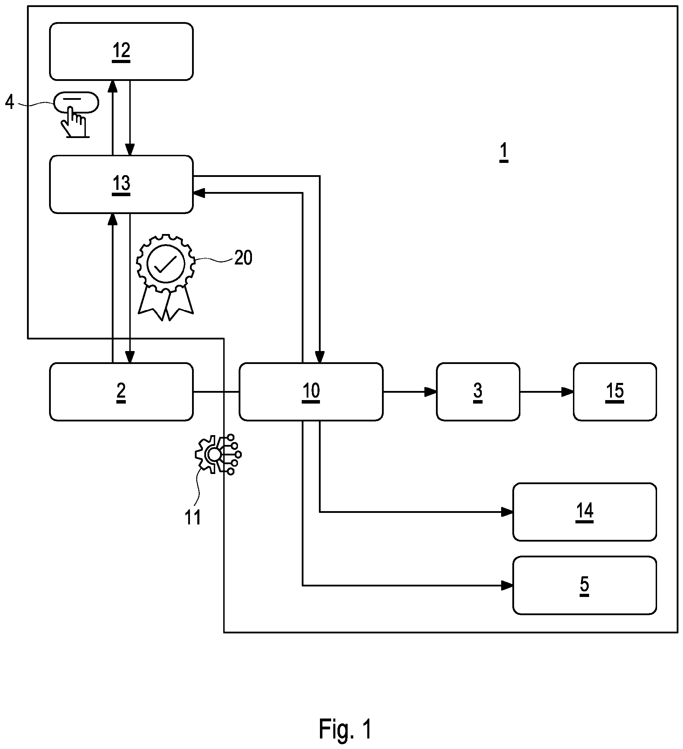

- Fig. 1: schematically shows a communication network according to an embodiment of the invention.

Fig. 1 schematically shows a communication network 1 according to an embodiment of the invention. The communication network 1 comprises a dedicated control interface 11 to be connected to by an artificial intelligence, Al, agent 2. The Al agent 2 is connected to the dedicated control interface 11. The communication network 1 may also comprise an Al inventory unit 12.

The communication network 1 may comprise a logging storage 14 and an operation support system, OSS, 15 for configuring an operation of the communication network 1. The communication network 1 further comprises an Al monitoring unit 10 associated with the dedicated control interface 11 to filter control requests 3 received from the Al agent 2 via the dedicated control interface 11.

The Al monitoring unit 10 is configured for carrying out a method according to an embodiment of the invention as follows.

The Al monitoring unit 10 may particularly be configured by means of a computer program product. The computer program product comprises a digital storage medium storing a program code. The program code causes a computing device to carry out the method according to an embodiment of the invention as the Al monitoring unit 10 for controlling the communication network 1 when being executed by a processor of the computing device.

The communication network 1 favorably protects the Al monitoring unit 10 from being manipulated by the Al agent 2. An element management system, EMS, 13 of the communication network 1 may provide the Al inventory unit 12.

The Al inventory unit 12 may initially register the Al agent 2 upon an authorization request 4 received from the Al agent 2 via an URL provided by the EMS 13 of the communication network 1, assign an Al agent ID 20 to the Al agent 2 and receiving a plurality of attributes defining a type of the Al agent 2, a purpose of the Al agent 2, administrative data associated with the Al agent 2 and/or technical data of the Al agent 2, the attributes being associated with the Al agent ID 20.

The artificial intelligence, Al, agent 2 controls the communication network 1 by transmitting control requests 3 to a dedicated control interface 11 of the communication network 1, each control request 3 defining an operational configuration of the communication network 1 to be realized by the communication network 1. The Al monitoring unit 10 may log each control request 3.

Preferably, the Al agent 2 automatically controls the communication network 1 in a closed loop. The Al agent 2 controls exemplarily a radio access network, RAN, as the communication network 1.

The Al monitoring unit 10, upon each reception of a control request 3, preferably verifies an authorization of the Al agent 2 by assessing a registration of the Al agent 2 with the Al inventory unit 12 of the communication network 1. Verifying the authorization may comprise verifying the Al agent ID 20 and attributes presented in the control request 3.

The Al monitoring unit 10 prevents a received control request 3 from being forwarded to the OSS 15 when a parameter value of the defined operational configuration exceeds a predetermined range. The Al monitoring unit 10 may raise an alert 5 when the control request 3 is not being forwarded to the OSS 15 or when the Al agent 2 tries to manipulate the Al monitoring unit 10.

The Al monitoring unit 10 may additionally prevent a control request 3 from being forwarded to the OSS 15 when a number of control requests 3 during a time interval exceeds a maximum rate of control requests 3 configured by an operator of the communication network 1.

The Al monitoring unit 10 may also prevent a control request 3 from being forwarded to the OSS 15 when an operational configuration of the communication network 1 defined by the control request 3 is different from a plurality of predetermined operational configurations.

On the other hand, the Al monitoring unit 10 allows the received control request 3 for being forwarded to OSS 15 and the defined operational configuration being realized by the communication network 1 when the parameter value is within the predetermined range. The Al monitoring unit 10 may receive the predetermined range from the Al inventory unit 12.

### Reference Numerals

- 1: communication network
- 10: AI monitoring unit
- 11: dedicated control interface
- 12: Al inventory unit
- 13: EMS
- 14: logging storage
- 15: operation support system, OSS, of the communication network
- 2: AI agent
- 20: Al agent ID
- 3: control request
- 4: authorization request
- 5: alert

## Claims

1. A method for controlling a communication network (1), wherein
- an artificial intelligence, Al, agent (2) connected to the communication network (1) controls the communication network (1) by transmitting control requests (3) to the communication network (1), each control request (3) defining an operational configuration of the communication network (1) to be realized by the communication network (1);
- the Al agent (2) is connected to a dedicated control interface (11) of the communication network (1);
- an Al monitoring unit (10) of the communication network (1) prevents a received control request (3) from being forwarded to an operation support system, OSS, (15) of the communication network (1) when a parameter value of the defined operational configuration exceeds a predetermined range and allows the received control request (3) for being forwarded to the OSS, (15) and being realized by the communication network (1) when the parameter value is within the predetermined range.

2. The method according to claim 1, wherein the Al monitoring unit (10), upon each reception of a control request (3), verifies an authorization of the Al agent (2) by assessing a registration of the Al agent (2) with an Al inventory unit (12) of the communication network (1).

3. The method according to claim 2, wherein the Al inventory unit (12) initially registers the Al agent (2) upon an authorization request (4) received from the Al agent (2) via an URL provided by an element management system, EMS, (13) of the communication network (1), assigns an Al agent ID (20) to the Al agent (2) and receives a plurality of attributes defining a type of the Al agent (2), a purpose of the Al agent (2), administrative data associated with the Al agent (2) and/or technical data of the Al agent (2), the attributes being associated with the Al agent ID (20).

4. The method according to claim 3, wherein verifying the authorization comprises verifying the Al agent ID (20) and attributes presented in the control request (3).

5. The method according to one of claims 3 or 4, wherein the Al monitoring unit (10) receives the predetermined range from the Al inventory unit (12).

6. The method according to one of claims 3 to 5, wherein the EMS (13) provides the Al inventory unit (12).

7. The method according to one of claims 1 to 6, wherein the communication network (1) protects the Al monitoring unit (10) from being manipulated by the Al agent (2).

8. The method according to one of claims 1 to 7, wherein the Al monitoring unit (10) raises an alert (5) when the control request (3) is not being forwarded or when the Al agent (2) tries to manipulate the Al monitoring unit (10).

9. The method according to one of claims 1 to 8, wherein the Al agent (2) automatically controls the communication network (1) in a closed loop.

10. The method according to one of claims 1 to 9, wherein the Al agent (2) controls a radio access network, RAN, as the communication network (1).

11. The method according to one of claims 1 to 10, wherein the Al monitoring unit (10) logs each control request (3).

12. The method according to one of claims 1 to 11, wherein the Al monitoring unit (10) prevents a control request (3) from being forwarded to the OSS (15) when a number of control requests (3) during a time interval exceeds a maximum rate of control requests (3) configured by an operator of the communication network (1).

13. The method according to one of claims 1 to 12, wherein the Al monitoring unit (10) prevents a control request (3) from being forwarded when an operational configuration of the communication network (1) defined by the control request (3) is different from a plurality of predetermined operational configurations.

14. A communication network (1), comprising a dedicated control interface (11) to be connected to by an artificial intelligence, Al, agent (2) and an Al monitoring unit (10) associated with the dedicated control interface (11) to filter control requests (3) received from the Al agent (2) via the dedicated control interface (11), the Al monitoring unit (10) being configured for carrying out a method according to one of claims 1 to 13.

15. A computer program product, comprising a digital storage medium storing a program code, the program code causing a computing device to carry out a method according to one of claims 1 to 13 as the Al monitoring unit (10) when being executed by a processor of the computing device.

## Amended claims

### Amended claims in accordance with Rule 137(2) EPC.

1. A method for controlling a communication network (1), wherein
- an artificial intelligence, Al, agent (2) connected to the communication network (1) controls the communication network (1) by transmitting control requests (3) to the communication network (1), each control request (3) defining an operational configuration of the communication network (1) to be realized by the communication network (1);
- the Al agent (2) is connected to a dedicated control interface (11) of the communication network (1);
- an Al monitoring unit (10) of the communication network (1) prevents a received control request (3) from being forwarded to an operation support system, OSS, (15) of the communication network (1) when a parameter value of the defined operational configuration exceeds a predetermined range and allows the received control request (3) for being forwarded to the OSS, (15) and being realized by the communication network (1) when the parameter value is within the predetermined range,
**characterized in that**
- the Al monitoring unit (10), upon each reception of a control request (3), verifies an authorization of the Al agent (2) by assessing a registration of the Al agent (2) with an Al inventory unit (12) of the communication network (1), the Al inventory unit (12) initially registering the Al agent (2) upon an authorization request (4) received from the Al agent (2) via an URL provided by an element management system, EMS, (13) of the communication network (1), assigning an Al agent ID (20) to the Al agent (2) and receiving a plurality of attributes defining a type of the Al agent (2), a purpose of the Al agent (2), administrative data associated with the Al agent (2) and/or technical data of the Al agent (2), the attributes being associated with the Al agent ID (20), and wherein verifying the authorization comprises verifying the Al agent ID (20) and attributes presented in the control request (3).

2. The method according to claim 1, wherein the Al monitoring unit (10) receives the predetermined range from the Al inventory unit (12).

3. The method according to claim 1 or 2, wherein the EMS (13) provides the Al inventory unit (12).

4. The method according to one of claims 1 to 3, wherein the communication network (1) protects the Al monitoring unit (10) from being manipulated by the Al agent (2).

5. The method according to one of claims 1 to 4, wherein the Al monitoring unit (10) raises an alert (5) when the control request (3) is not being forwarded or when the Al agent (2) tries to manipulate the Al monitoring unit (10).

6. The method according to one of claims 1 to 5, wherein the Al agent (2) automatically controls the communication network (1) in a closed loop.

7. The method according to one of claims 1 to 6, wherein the Al agent (2) controls a radio access network, RAN, as the communication network (1).

8. The method according to one of claims 1 to 7, wherein the Al monitoring unit (10) logs each control request (3).

9. The method according to one of claims 1 to 8, wherein the Al monitoring unit (10) prevents a control request (3) from being forwarded to the OSS (15) when a number of control requests (3) during a time interval exceeds a maximum rate of control requests (3) configured by an operator of the communication network (1).

10. The method according to one of claims 1 to 9, wherein the Al monitoring unit (10) prevents a control request (3) from being forwarded when an operational configuration of the communication network (1) defined by the control request (3) is different from a plurality of predetermined operational configurations.

11. A communication network (1), comprising a dedicated control interface (11) to be connected to by an artificial intelligence, Al, agent (2) and an Al monitoring unit (10) associated with the dedicated control interface (11) to filter control requests (3) received from the Al agent (2) via the dedicated control interface (11), the Al monitoring unit (10) being configured for carrying out a method according to one of claims 1 to 10.

12. A computer program product, comprising a digital storage medium storing a program code, the program code causing a computing device to carry out a method according to one of claims 1 to 10 as the Al monitoring unit (10) when being executed by a processor of the computing device.
